# FASCICULE DE BREVET EUROPEEN

(11) **EP 3 427 033 B1**
(45) Date de publication et mention de la délivrance du brevet: **06.11.2024**
(21) Numéro de dépôt: 17709099.0
(22) Date de dépôt: 08.03.2017
(51) Int. Cl.: G01N 5/02, G01N 29/02, G01N 29/036

(54) **DISPOSITIF DE DÉTECTION D'AU MOINS UN COMPOSÉ CHIMIQUE DANS UN FLUIDE**
VORRICHTUNG ZUR ERKENNUNG VON MINDESTENS EINER CHEMISCHEN VERBINDUNG IN EINER FLÜSSIGKEIT
DEVICE FOR DETECTING AT LEAST ONE CHEMICAL COMPOUND IN A FLUID

(30) Priorité: 09.03.2016 FR 1651962
(43) Date de publication de la demande: 16.01.2019
(73) Titulaire: Commissariat à l'Energie Atomique et aux Energies Alternatives, 75015 Paris (FR)
(72) Inventeur: BARTHET, Christelle, 37260 Artannes sur Indre (FR); ELOY, Nathalie, 37150 Luzillé (FR); ROUSIER, Rodrigue, 38000 Grenoble (FR); COLIN, Delphine, 21910 Noisron sous Gevrey (FR)
(74) Mandataire: Brevalex
(86) Numéro de dépôt international: PCT/EP2017/055475
(87) Numéro de publication internationale: WO 2017/153488

(56) Documents cités:
- EP-B1- 1 631 820
- DE-U1- 9 209 302
- JP-A- H11 271 204
- US-A- 6 085 576
- G BUNTE ET AL: "Gasphase detection of TNT with layered imprinted polymers", INTERNATIONAL ANNUAL CONFERENE OF ICT, 30 June 2006 (2006-06-30), Karlsruhe, DE, pages 183.1 - 183.9, XP055329870, ISSN: 0722-4087

## Description

### DOMAINE TECHNIQUE

La présente invention concerne la détection d'au moins un composé chimique dans un fluide. Ces composés chimiques peuvent prendre la forme de vapeurs ou de particules solides.

Cette détection a un intérêt tout particulier lorsqu'elle s'applique à des composés chimiques dangereux, illégaux ou soumis à réglementation tels que des explosifs en général, des précurseurs d'explosifs, des marqueurs d'explosifs, des stupéfiants, des composés organiques toxiques volatils ou non comme le benzène et ses dérivés (toluène, xylène, chlorobenzène ...), le nitrométhane, d'autres composés chimiques toxiques comme le chlore, l'ammoniaque, l'éthanol etc...

Ces composés chimiques peuvent avoir des concentrations dans l'air extrêmement faibles, de l'ordre de quelques parties par trillion ou même inférieures à une partie par trillion, comme par exemple l'octogène (4.10⁻⁶ ppt), la pentrite (15 ppt), l'hexogène (4 ppt), la cocaïne (0,2 ppt), l'héroïne (0,4 ppt). On rappelle que dans ce contexte 1 ppt correspond à une molécule de composé chimique à détecter parmi 1000 milliards de molécules d'air. De la même manière, 1 ppb correspond à une molécule de composé chimique à détecter parmi 1 milliard de molécules d'air et 1 ppm correspond à une molécule de composé chimique à détecter parmi 1 million de molécules d'air. Les valeurs de concentrations dans l'air données ci-dessus correspondent à des valeurs à 25°C.

### ÉTAT DE LA TECHNIQUE ANTÉRIEURE

Il existe des dispositifs de détection de composés chimiques tels que des explosifs qui utilisent des dispositifs multi-capteurs de type microbalance piézoélectrique.

Dans le brevet américain US 6 544 478, plusieurs capteurs de type microbalance à quartz sont présentés, ils sont réalisés sur une même lame de quartz. Chaque capteur comporte une paire d'électrodes en vis-à-vis prenant en sandwich la lame de quartz, l'ensemble formant un résonateur. Le principe de fonctionnement est le suivant. On dépose sur au moins une électrode du capteur un revêtement d'un matériau sensible destiné à adsorber la substance chimique à détecter. Ce revêtement a une affinité avec une ou plusieurs substances chimiques à détecter. Le résonateur ainsi revêtu possède une fréquence de résonance nominale. Lors de l'adsorption de la substance chimique, la masse à la surface du résonateur augmente et la fréquence de résonance du capteur diminue. C'est cette diminution qui est détectée. Chaque capteur peut posséder un revêtement spécifique de manière à pouvoir rendre le dispositif de détection sensible à plusieurs substances chimiques et même à pouvoir détecter plusieurs substances chimiques simultanément.

Un inconvénient de ce dispositif multi-capteurs est qu'il est très complexe à réaliser et qu'il nécessite un appareillage très spécifique. Les électrodes ont des diamètres de l'ordre de 2 ou 3 millimètres et leur espacement en surface ne dépasse pas 6 millimètres. En outre, il est très délicat d'effectuer le revêtement en couche mince sur un seul capteur sans affecter les capteurs voisins.

Il se produit inévitablement des interférences entre les microbalances à quartz, en particulier lorsque la fréquence de résonance des différents capteurs est de l'ordre de la dizaine de MHz.

Ce dispositif multi-capteurs n'est donc pas adapté pour pouvoir fonctionner à des fréquences encore plus élevées, par exemple de l'ordre de 100 MHz, puisque le parasitage induirait une perte de stabilité de signal et de sensibilité de détection. Or plus la fréquence de résonance nominale du capteur est élevée, plus ce dernier est capable de détecter des composés chimiques présents dans l'air à de très faibles concentrations. Pour des concentrations dans l'air de l'ordre de quelques ppb (parties par billion) à une température donnée, des fréquences de résonances de l'ordre de la centaine de MHz sont requises.

Dans la demande de brevet US 2011/0020944, il est décrit un dispositif de détection de triperoxyde de triacétone (TATP). Il comporte six capteurs de type microbalance à quartz dont la fréquence de résonance est de 195 MHz, ce qui signifie qu'ils ont une sensibilité élevée. Ils sont rapportés sur un tube fluidique et ainsi agencés en série par rapport au flux du gaz à analyser. Cette géométrie conduit à une diminution de la concentration de vapeur de la substance chimique à détecter par dilution du flux ou par adsorption des vapeurs sur les parois du tube. Dans le cas du TATP, qui possède une concentration dans l'air relativement élevée (61 ppm à 25°C), cet effet d'appauvrissement du flux conjugué à une sensibilité élevée des capteurs de type microbalance a peu d'importance.

En revanche, ce dispositif de détection ne conviendrait pas pour des concentrations de vapeur faibles, c'est-à-dire dans ce contexte de l'ordre de quelques dizaines de parties par trillion ou même inférieures à une partie par trillion en volume.

Dans les publications [1] de Lau K.T et al. et [2] de Seyama M. et al., les capteurs de type microbalance à quartz ont une fréquence de résonance de 10 MHz. Ils sont disposés en série et le flux du fluide à analyser se propage tangentiellement à la surface de la lame de quartz.

Du fait de leur faible fréquence de résonance et de la configuration en série, la détection ne peut s'appliquer qu'à des composés chimiques dont la concentration dans l'air est élevée, de l'ordre de plusieurs dizaines de parties par million comme le toluène (32,6 ppm), l'éthanol et le nitrométhane.

Dans la publication [3] de Auge J. et al., cinq capteurs de type microbalance à quartz sont placés en série dans une même chambre. Le flux du fluide, dans lequel le composé chimique est à détecter, parcourt une cellule à effet Peltier avant d'arriver en contact avec les capteurs de type microbalance à quartz. Le désavantage de cette configuration est que le flux de fluide s'est fortement appauvri par adsorption des composés chimiques à détecter lors de leur trajet dans la cellule à effet Peltier.

Dans la publication [4] de Bunte et al., le dispositif de détection comporte deux groupes de quatre capteurs de type microbalance à quartz placés dans une chambre thermostatée en aluminium. Les capteurs de type microbalance à quartz sont agencés en série dans chaque groupe. La fréquence de résonance est de 10 MHz. La détection du TNT ayant une pression de vapeur de 7ppb ne peut être obtenue qu'en revêtant les capteurs de type microbalance à quartz de polymères à empreinte moléculaire qui sont des matériaux présentant une forte affinité pour une cible gazeuse donnée. Néanmoins, les polymères à empreinte moléculaire nécessitent un développement long et par conséquent très onéreux. Par ailleurs, un matériau spécifique doit être synthétisé pour chacune des cibles envisagées. Enfin, les polymères à empreinte moléculaire sont adaptés à une détection en phase liquide plutôt qu'en phase gazeuse.

Le brevet EP 1 631 820 décrit un dispositif de détection de gaz avec six capteurs de gaz agencés en deux groupes de trois pour faire de la détection d'arômes ou d'odeurs. Leur type n'est pas précisé. La chambre dans laquelle sont disposés les capteurs de gaz se trouve entre un conduit divergent d'entrée et un conduit convergent de sortie, elle possède une paroi de base, une paroi de sommet et deux parois de côté. Un diffuseur en grillage est prévu entre le conduit divergent d'entrée et la chambre qui contient les capteurs de gaz. Les capteurs de gaz sont disposés cote à cote selon une direction transversale au flux du gaz et ils ont une face sensible qui est parallèle aux parois de sommet et de base de la chambre. Dans ce dispositif non plus des composés chimiques à faible concentration ne pourront pas être détectés car le flux gazeux arrivant dans la chambre se sera appauvri en composés à détecter par adsorption en parcourant le conduit divergent et en traversant le diffuseur. Dans ce dispositif par ailleurs, il y a un risque non négligeable de pollution progressive du conduit divergent d'entrée et du diffuseur (par exemple par des composés organiques volatils), ce qui peut être dommageable à la fiabilité de détection, particulièrement pour de faibles concentrations de composés à détecter.

Le brevet JPH11271204A décrit aussi un dispositif de détection de gaz agencé pour faire de la détection d'arômes ou d'odeurs. Le gaz vaporisé de l'échantillon est appliqué à une pluralité de capteurs oscillateurs à quartz ayant des caractéristiques différentes dont les fréquences de résonance sont modifiées en fonction de la quantité de gaz à adsorber. Un gaz mixte d'un gaz porteur pour transporter le gaz vaporisé et le gaz vaporisé est fourni sous une forme d'impulsion, et l'échantillon est identifié à partir du changement de la fréquence d'oscillation de chaque capteur à oscillateur à cristal.

Les publications évoquées plus haut sont référencées plus complètement en fin de description.

### EXPOSÉ DE L'INVENTION

La présente invention a justement comme but de proposer un dispositif de détection d'au moins un composé chimique dans un fluide qui remédie à l'un et/ou l'autre des inconvénients mentionnés ci-dessus.

Un but est en particulier de proposer un tel dispositif de détection d'au moins un composé chimique qui soit efficient, même si la concentration du composé dans le fluide est très faible, de l'ordre quelques parties par trillion ou même inférieure à une partie par trillion.

Un autre but de l'invention est de proposer un tel dispositif de détection qui soit capable de détecter un grand nombre de composés chimiques en adaptant seulement le matériau sensible au composé à détecter.

Pour atteindre ces buts l'invention concerne plus précisément un dispositif de détection de détection d'un composé chimique dans un fluide comprenant une chambre dotée d'un orifice d'entrée d'un flux du fluide et d'un orifice d'aspiration du flux du fluide ayant traversé la chambre, et contenant plusieurs capteurs de type microbalance piézoélectrique délimités chacun par deux faces principales et un chant et portés chacun par une paroi de la chambre, au moins une des faces principales de chaque capteur étant revêtue d'un matériau sensible au composé à détecter, chaque capteur présentant un plan médian de part et d'autre duquel s'étend chacune des faces principales, caractérisé en ce que chaque capteur est agencé dans la chambre de manière à ce que son plan médian soit localement orthogonal à la paroi de la chambre qui porte le capteur et en ce que les capteurs sont situés à une même distance de l'orifice d'entrée.

Dans un mode de réalisation, les capteurs peuvent être agencés en éventail, l'éventail ayant un centre du côté de l'orifice d'entrée.

Dans ce mode de réalisation, la chambre peut comporter un premier tronçon divergent rabouté directement à un second tronçon convergent, l'orifice d'entrée débouchant dans le tronçon divergent et l'orifice d'aspiration débouchant dans le tronçon convergent.

Dans un autre mode de réalisation, les capteurs peuvent avoir leurs faces principales parallèles et être imbriqués tête bêche.

La chambre peut être parallélépipédique construite autour d'un axe et posséder deux faces opposées transversales à cet axe, le flux du fluide parcourant la chambre selon cet axe, les deux faces transversales formant l'orifice d'entrée et l'orifice d'aspiration.

La chambre peut posséder deux parois latérales selon cet axe, dites paroi de base et paroi de sommet en utilisation, certains capteurs imbriqués tête bêche sont fixés à la paroi de base, et les autres à la paroi de sommet.

Il est préférable pour favoriser une bonne répartition du flux du fluide au niveau des capteurs, que la chambre contienne, en outre, un déflecteur du flux du fluide placé en aval des capteurs, entre les capteurs et l'orifice d'aspiration.

Dans encore un autre mode de réalisation, la chambre peut être en forme d'un tube cylindrique de révolution, les capteurs étant placés radialement dans la chambre.

Dans ce mode de réalisation, les deux extrémités du tube sont ouvertes et matérialisent l'orifice d'entrée et l'orifice d'aspiration.

Dans ce mode de réalisation, la chambre peut comporter en outre un déflecteur central en forme de tige, coaxiale avec l'axe du cylindre, s'étendant le long des capteurs, dépourvue d'extrémité en amont des capteurs.

Dans ce mode de réalisation, la chambre peut comporter en outre un déflecteur additionnel, placé en aval des capteurs et destiné à maintenir en position dans la chambre, le déflecteur central.

Le déflecteur additionnel peut être formé de plusieurs barreaux radiaux en appui d'un côté sur le déflecteur central et de l'autre sur la surface interne du tube.

Pour éviter l'adsorption du composé chimique par la surface interne de la chambre et par le déflecteur, le déflecteur central ou le déflecteur additionnel, il est préférable qu'ils soient réalisés en acier inoxydable électro-poli.

Le matériau sensible peut être choisi parmi la silice fonctionnalisée avec des groupements méthyle ou le polypentiptycène.

Pour que le dispositif de détection soit sensible à des pressions de vapeur faibles, de l'ordre de quelques dizaines de ppt, voire de quelques ppt, il est préférable que les capteurs aient une fréquence de résonance nominale de l'ordre de 100 MHz.

La distance séparant les capteurs de l'orifice d'entrée est de préférence telle que le flux du fluide conserve une composition constante ou quasiment constante en parcourant cette distance et le flux du fluide atteint tous les capteurs sensiblement simultanément.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A, 1B montrent deux vues en coupe d'un premier exemple d'un dispositif de détection d'au moins un composé chimique dans un fluide, objet de l'invention, les capteurs étant positionnés en éventail ;
les figures 2A, 2B montrent deux vues en 3D d'un second exemple d'un dispositif de détection d'au moins un composé chimique dans un fluide, objet de l'invention, les capteurs étant positionnés imbriqués tête bêche ;
la figure 2C représente le champ de vitesse dans le capteur des figures 2A, 2B ;
les figures 3A, 3B montrent deux vues en 3D d'un troisième exemple d'un dispositif de détection d'au moins un composé chimique dans un fluide, objet de l'invention, les capteurs étant positionnés radialement ;
la figure 4A illustre un dispositif de détection d'au moins un composé chimique dans un fluide de l'art antérieur, les capteurs étant montés en série ;
les figures 4B, 4C illustrent l'amplitude de détection du 2,4 dinitrotoluène avec un dispositif de détection des figures 2A, 2B et un dispositif de détection des figures 1A, 1B dont les capteurs sont recouverts de silice fonctionnalisée ;
la figure 5 montre l'amplitude de détection du trinitrotoluène avec le dispositif de détection illustré aux figures 1A, 1B, le dispositif de détection illustré à la figure 4A et un capteur unique résonant à 9 MHz ;
les figures 6A, 6B, 6C montrent le gain en sélectivité des capteurs d'un dispositif de détection des figures 1A, 1B par rapport au capteur unique résonant à 9 MHz pour trois composés chimiques à détecter, respectivement, le nitrométhane, l'éthylène glycol dinitrate et le 4-nitrotoluène ;
la figure 7 illustre la variation de fréquence delta f en fonction du temps sous vapeurs de 2,3-diméthyl-2,3-dinitrobutane avec le dispositif de détection des figures 1A, 1B et celui des figures 2A, 2B ;
la figure 8 illustre l'évolution de la fréquence de résonance des capteurs du dispositif de détection des figures 1A, 1B en fonction du temps en présence de vapeurs d'amphétamine ;
la figure 9 illustre l'évolution de la fréquence de résonance des capteurs du dispositif de détection des figures 1A, 1B en fonction du temps en présence de vapeurs de benzoate de méthyle ;
la figure 10 illustre l'évolution de la fréquence de résonance des capteurs du dispositif de détection des figures 1A, 1B en fonction du temps en présence de vapeurs issues de cocaïne saisie.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

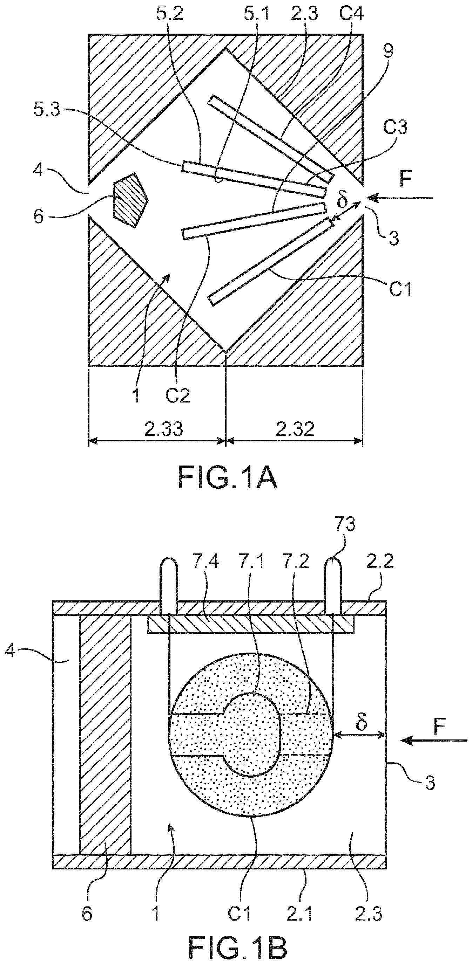

On va maintenant s'intéresser à un premier mode de réalisation d'un dispositif de détection d'au moins un composé chimique dans un fluide, objet de l'invention. On se réfère aux figures 1A, 1B. Le dispositif de détection d'au moins un composé chimique comporte une chambre 1 délimitée par des parois 2.1, 2.2, 2.3 et dotées d'un orifice d'entrée 3 d'un flux du fluide F et d'un orifice d'aspiration 4 du flux du fluide F ayant traversé la chambre 1.

Parmi ces parois, il y a une paroi de base 2.1, une paroi de sommet 2.2 et une paroi latérale 2.3 entre la paroi de base 2.1 et la paroi de sommet 2.2, lorsque le dispositif de détection est en position de travail. La figure 1A est une vue, en coupe, selon un plan horizontal médian et la figure 1B est une vue en coupe, selon un plan vertical médian, du dispositif de détection objet de l'invention, en position de travail.

Les orifices d'entrée et d'aspiration 3, 4 peuvent s'étendre dans la paroi latérale sur toute la distance séparant la paroi de fond 2.1 et la paroi de sommet 2.2. Ils peuvent également s'étendre sur une distance plus limitée.

Dans la chambre 1 se trouvent des capteurs de fluide C1 à C4 de type microbalance piézoélectrique. Le matériau piézoélectrique est le plus souvent du quartz mais peut également être constitué d'un autre oxyde, par exemple de l'oxyde de germanium. La fréquence de résonance de ces capteurs est de préférence supérieure à 50 MHz.

Les capteurs C1 à C4 ont une forme plate avec deux faces principales 5.1, 5.2 reliées par un chant 5.3. Chaque capteur présente un plan médian de part et d'autre duquel s'étend chacune des faces principales. Une embase 7.4, solidaire de la paroi de fond ou de la paroi de sommet, porte chaque capteur. Chaque capteur est agencé dans la chambre 1 de manière à ce que son plan médian soit localement orthogonal à la paroi qui le porte, par exemple la paroi de sommet 2.2 dans l'exemple représenté. Par comparaison avec le système du brevet EP 1631820 où le plan médian des capteurs est parallèle à la paroi qui les porte, un tel agencement permet, à nombre de capteurs équivalent, de réduire le volume de la chambre. Celui-ci est effectivement typiquement inférieur à 5 cm³. Il en découle une faible surface d'adsorption ne venant pas altérer la (très faible) concentration des composés que l'on cherche à détecter, ainsi qu'un remplissage rapide et donc une vitesse de détection accrue.

Chaque face principale 5.1, 5.2 est équipée d'une électrode 7.1, 7.2 et chaque électrode se termine par un contact électrique 7.3 accessible depuis l'extérieur de la chambre 1. Les électrodes traversent l'embase 7.4 avant de former les contacts électriques 7.3. Sur la figure 1B un seul capteur est représenté dans un souci de simplification. Au moins une des faces principales 5.1 ou 5.2 de chaque capteur C1 à C4 est revêtue d'un matériau sensible 9, destiné à adsorber le composé chimique ou les composés chimiques à détecter. Le matériau sensible dépend des composés chimiques à détecter. Par exemple il peut s'agir de silice fonctionnalisée avec des groupements méthyle ou de polypentiptycène si l'on veut détecter des vapeurs de 2,4 dinitrotoluène ou DNT (pᵥₐₚ 350 ppb), d'éthylène glycol dinitrate ou EGDN (pᵥₐₚ 100 ppm) ou même de 4-nitrotoluène ou 4-NT (pᵥₐₚ 64 ppb).

Les capteurs C1 à C4 sont agencés dans la chambre 1 sur le chant 5.3 et sont fixés sur une même paroi qui est, dans cet exemple non limitatif, la paroi de sommet 2.2. On aurait bien sûr pu envisager que ce soit la paroi de base 2.1. Les contacts électriques 7.3 traversent la paroi concernée.

Les capteurs C1 à C4 sont disposés en éventail, l'éventail est ouvert et est délimité, comme un secteur de cercle dont l'angle au sommet est inférieur à 180°, par deux rayons partant d'un centre et par un arc de cercle. L'éventail a son centre du côté de l'orifice d'entrée 3 et son arc de cercle du côté de l'orifice d'aspiration 4. Les capteurs sont dénommés C1 à C4 en se déplaçant d'un bord à l'autre de l'éventail. Les capteurs C1à C4 sont situés chacun sensiblement à une même distance δ de l'orifice d'entrée 3. Ainsi le flux du fluide F qui va parcourir leurs faces principales a une composition identique ou quasiment identique. On peut ainsi assimiler le montage des capteurs C1 à C4 à un montage en parallèle alors que dans les configurations de l'art antérieur décrites précédemment (à l'exception du brevet EP 1 631 820), il s'agit d'un montage en série. Le montage parallèle permet d'obtenir une réponse en détection plus fiable car délivrée simultanément par plusieurs capteurs, en comparaison de la réponse en détection obtenue avec des capteurs en série, balayés successivement par le flux du fluide.

En outre, cette distance δ est très petite de manière à ce que le fluide ne se soit pas appauvri ou quasiment pas appauvri en composé chimique à détecter, entre le moment où il pénètre dans le dispositif de détection par l'orifice d'entrée 3 et le moment où il atteint les capteurs C1 à C4. Le fluide ne rencontre pas ou quasiment pas de structure susceptible de l'adsorber entre son entrée dans le dispositif et son arrivée au niveau des capteurs. Lorsqu'il atteint les capteurs C1 à C4, le fluide a ainsi une composition identique ou quasiment identique à celle qu'il présentait à l'entrée du dispositif. Les deux orifices 3, 4 sont placés en vis-à-vis de part du groupe de capteurs C1 à C4. Le groupe de capteurs C1 à C4 est en forme d'éventail et les différents capteurs C1 à C4 sont placés selon des rayons du secteur de cercle. Pour créer le flux du fluide, le dispositif de détection de composés chimiques est destiné à coopérer avec une pompe d'aspiration (non représentée) qui sera branchée à l'orifice d'aspiration 4.

Les parois de la chambre sont réalisées dans un matériau le moins rugueux possible de manière à adsorber le moins possible les composés chimiques à détecter contenues dans le fluide. Plus la rugosité est élevée, plus la surface des parois est grande et plus il y a risque que des substances chimiques à détecter restent piégées. Il peut s'agir d'acier inoxydable électro-poli par exemple.

Dans l'exemple des figures 1A, 1B, la paroi latérale 2.3 de la chambre 1 comporte un premier tronçon divergent 2.32 rabouté directement à un second tronçon convergent 2.33. L'orifice d'entrée 3 débouche dans le tronçon divergent 2.32 et l'orifice d'aspiration 4 débouche dans le tronçon convergent 2.33.

Le groupe de capteurs se trouve majoritairement au niveau du premier tronçon divergent 2.32 de manière à ce que la distance δ soit la plus petite possible.

La chambre 1 contient également, de préférence, un déflecteur aval 6 placé sur le trajet du flux du fluide F entre le groupe de capteurs C1 à C4 et l'orifice d'aspiration 4. Ce déflecteur 6 a une forme de colonne et s'étend entre la paroi de sommet 2.2 et la paroi de base 2.1. La section de la colonne est adaptée à la forme de la chambre, à l'agencement et au nombre de capteurs C1 à C4 et à la position de la colonne par rapport aux capteurs. Ce déflecteur aval 6 permet de guider le flux du fluide F pour le faire se diriger vers l'orifice d'aspiration 4, une fois qu'il a parcouru les capteurs, sans qu'il percute le second tronçon convergent 2.33 et qu'il perturbe l'écoulement autour des capteurs C1 à C4. La chambre 1 possède alors une section en parallélogramme et les orifices d'entrée 3 et d'aspiration 4 sont dans deux angles opposés du parallélogramme. La présence du déflecteur aval 6 renforce le fait que la concentration en composés à détecter est identique ou quasi identique au niveau de chacun des capteurs C1 à C4. Le volume de la chambre 1 et sa géométrie sont adaptés au volume hors tout du groupe de capteurs C1 à C4. Ce volume est réduit par rapport à celui des chambres logeant des capteurs en série. Ce volume peut être inférieur à 5 centimètres cube, avec les capteurs dont la longueur et la largeur sont de l'ordre de 7 millimètres. La surface d'adsorption des parois est réduite par rapport à celle des parois des chambres logeant des capteurs en série. Le remplissage avec le fluide est alors plus rapide et donc également la vitesse de détection.

Ce dispositif de détection d'au moins un composé chimique dans un fluide convient à de très faibles pression de vapeurs pouvant aller jusqu'à la partie par trillion.

Les signaux délivrés en parallèle par les différents capteurs ont été exploités simultanément via un algorithme de traitement du signal optimisé tel que la fusion de données. Ce traitement de données permet de gagner en sélectivité de détection, voire même d'identifier les composés chimiques à analyser.

Le dispositif de détection d'au moins un composé chimique, objet de l'invention, est particulièrement compact et peut être intégré dans un système portable capable de répondre à des besoins dans de nombreux domaines : recherche d'explosifs ou de stupéfiants dans des bagages, notamment dans des aéroports ou aux frontières, mesure de la toxicité de l'air dans l'habitat, les collectivités, etc.

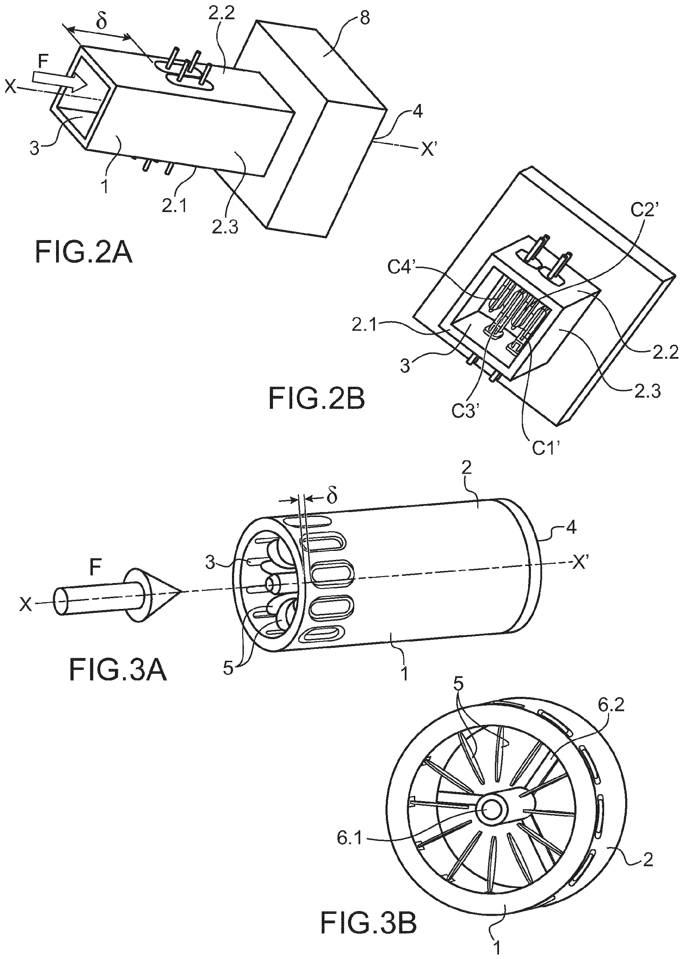

On va maintenant s'intéresser aux figures 2A, 2B qui montrent un exemple d'un second mode de réalisation d'un dispositif de détection d'au moins un composé chimique objet de l'invention.

La figure 2A est une vue tridimensionnelle de face du dispositif de détection d'au moins un composé chimique et la figure 2B est une vue tridimensionnelle de côté du dispositif de détection d'au moins un composé chimique. Maintenant la chambre 1 prend la forme d'un parallélépipède rectangle construit autour d'un axe XX'. Elle possède une paroi de base 2.1 et une paroi de sommet 2.2 séparées par une paroi latérale 2.3. Sa longueur est dirigée selon cet axe XX'. L'orifice d'entrée 3 et l'orifice d'aspiration 4 correspondent à des faces opposées transversales à cet axe XX'. L'orifice d'entrée 3 se trouve du côté de la flèche F et l'orifice d'aspiration 4 débouche à l'intérieur d'un capotage 8 dans lequel se trouve la pompe d'aspiration (non représentée).

Les capteurs sont agencés dans la chambre 1 de manière à ce que le plan médian de chaque capteur soit localement orthogonal à la paroi qui le porte, à savoir dans l'exemple représenté la paroi de sommet 2.2 pour les capteurs C2' et C4' et la paroi de base 2.1 pour les capteurs C1' et C3'. Deux capteurs C1' à C4' voisins sont ainsi montés imbriqués tête-bêche, l'un étant fixé sur une première paroi et l'autre sur une autre paroi opposée à la première paroi. Ces parois sont respectivement la paroi de base 2.1 et la paroi de sommet 2.2. Les contacts électriques 7.3 traversent la paroi concernée.

Les capteurs C1' à C4' sont plus particulièrement agencés dans la chambre 1 sur leur chant 5.3, en étant disposés parallèlement les uns aux autres. Ils sont situés chacun sensiblement à une même distance δ de l'orifice d'entrée 3. Le montage est en parallèle.

Le fait d'imbriquer tête bêche les capteurs C1' à C4' et de les disposer parallèlement permet d'utiliser un nombre de capteurs plus élevé que dans la configuration en éventail. Jusqu'à 20 capteurs de longueur et largeur de l'ordre de 0,70 centimètre et d'épaisseur 0,30 centimètre, par exemple, peuvent être utilisés dans une chambre dont la section droite serait de l'ordre du centimètre carré. Dans cette configuration également, les capteurs C1' à C4' sont disposés très près de l'orifice d'entrée 3 et le fluide ne se sera pas appauvri ou quasiment pas appauvri entre l'instant où il passe à travers l'orifice d'entrée 3 et l'instant où il commence à lécher les capteurs C1' à C4'.

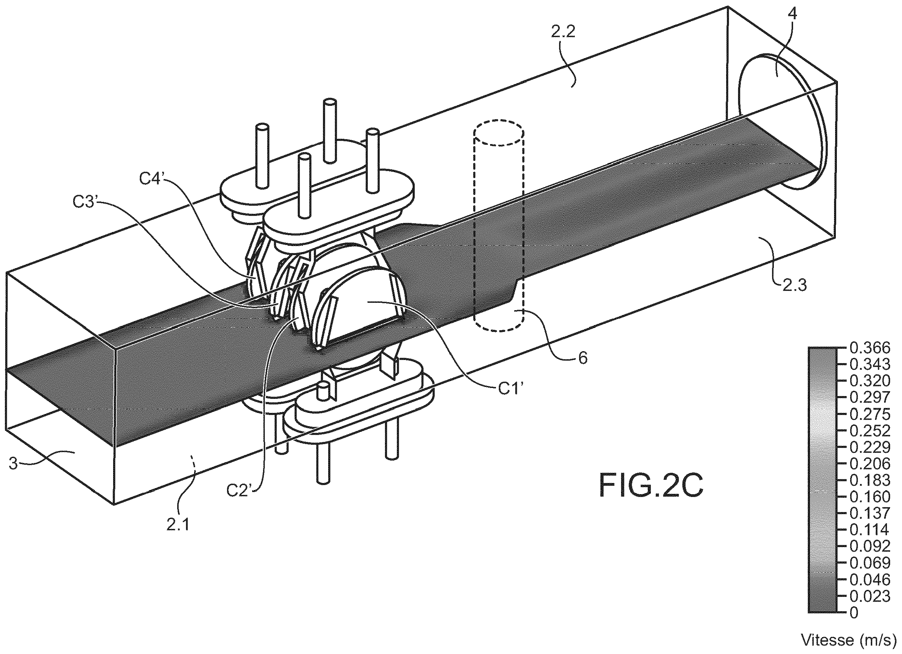

Il est possible, comme illustré sur les figures 1A, 1B, surtout si le nombre de capteurs devient important, de prévoir un déflecteur aval 6 placé entre les capteurs C1' à C4' et l'orifice d'aspiration 4 de manière à permettre une homogénéité de l'écoulement du fluide au niveau des capteurs C1' à C4'. Ce déflecteur 6 est esquissé en pointillés sur la figure 2C juste pour montrer comment serait son agencement. Il ne diminue pas la concentration en composés chimiques par adsorption par les parois alors que le fluide parcourt toujours les capteurs. La figure 2C montre une représentation du champ de vitesse dans la chambre 1 du dispositif des figures 2A et 2B. La vitesse du fluide est sensiblement uniforme au niveau des capteurs C1' à C4'. Le déflecteur 6 aval améliorerait encore la répartition du champ de vitesse pour qu'il soit plus uniforme.

Sur les figures 3A et 3B, on a représenté encore un autre mode de réalisation d'un dispositif de détection d'au moins un composé chimique. Maintenant la chambre 1 a une forme de tube cylindrique 2 de révolution construit autour d'un axe XX'. Les deux extrémités du tube 2 sont ouvertes et matérialisent l'orifice d'entrée 3 et l'orifice d'aspiration 4.

La pompe d'aspiration n'est pas représentée. Les capteurs 5 sont placés radialement dans la chambre 1 et sont fixés au tube 2 cylindrique de révolution à proximité de l'orifice d'entrée 3. Ils sont toujours dans un montage en parallèle, avec le plan médian de chaque capteur localement orthogonal à la paroi (le tube 2) qui le porte.

Un déflecteur central 6.1 en forme de tige, dirigé selon l'axe XX', s'étend le long des capteurs 5 et en aval de ceux-ci. Il n'empiète pas sur l'espace de la chambre 1 situé entre l'orifice d'entrée 3 et les capteurs 5, en amont des capteurs 5. La tige est dépourvue d'extrémité en amont des capteurs 5. Un déflecteur additionnel 6.2, placé en aval des capteurs 5 est prévu, il prend la forme de plusieurs barreaux radiaux. Il a également une fonction de maintien en position du déflecteur central 6.1. Les barreaux radiaux 6.2 sont en appui d'un côté sur le déflecteur central 6.1 et de l'autre sur la surface interne du tube 2.

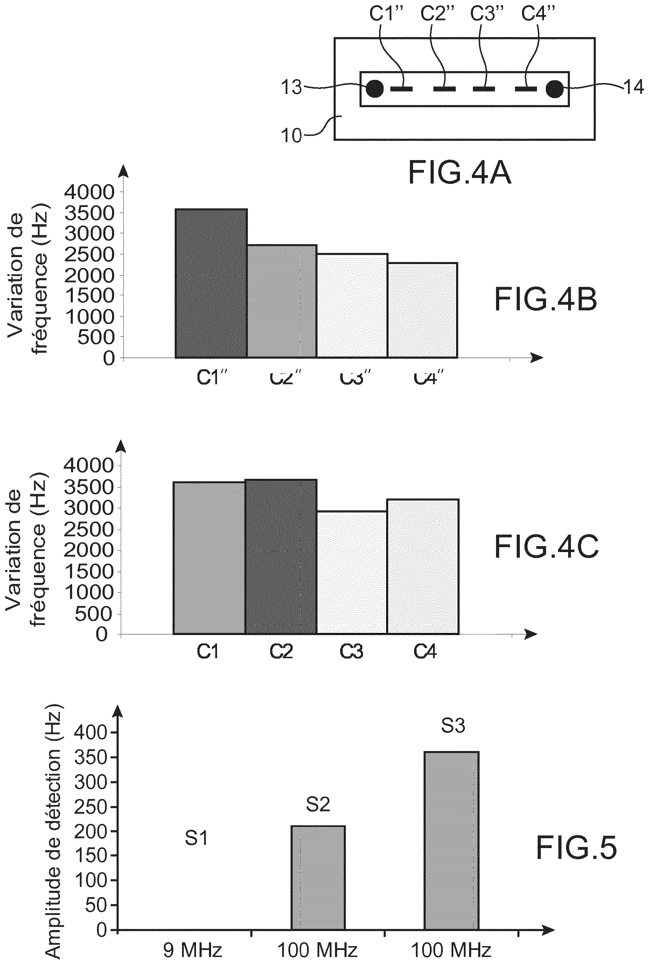

La figure 4A illustre un dispositif de l'art antérieur avec une succession de 4 capteurs C1" à C4" mis en série dans une chambre 10 pourvue d'un orifice d'entrée 13 et d'un orifice d'aspiration 14. Le flux du fluide parcourt les capteurs C1" à C4" tangentiellement et successivement.

Les figures 4B et 4C mettent en évidence le gain en homogénéité de détection d'un dispositif de détection de type de celui des figures 1A, 1B avec un montage en parallèle des capteurs C1 à C4 en éventail. La figure 4B illustre l'amplitude de détection du 2,4-DNT (pᵥₐₚ = 350 ppb) dans le cas du dispositif de détection de la figure 4A avec un agencement série des capteurs C1" à C4". La figure 4C représente l'amplitude de détection du 2,4-DNT dans le cas du dispositif de détection des figures 1A, 1B avec un montage en parallèle des capteurs C1 à C4 disposés en éventail. Les capteurs sont des capteurs de type microbalance à quartz dont la fréquence de résonance est de 100 MHz. Les capteurs sont revêtus d'un matériau sensible de type silice fonctionnalisée avec des groupements méthyle. Les mesures de variation de fréquence d'un capteur à l'autre sont faites après 10 minutes d'exposition au flux du fluide contenant des vapeurs de 2,4-DNT.

Dans le cas du dispositif de l'art antérieur avec des capteurs C1"-C4" en série, plus le capteur est éloigné de l'orifice d'entrée plus l'amplitude de la détection est faible. Cela s'explique par une adsorption des vapeurs de 2,4-DNT par les parois de la chambre et par les capteurs eux-mêmes au fur et à mesure de la progression du flux du fluide dans la chambre. On observe une diminution progressive de la concentration en 2,4-DNT entre le premier capteur C1" et le dernier capteur C4" de la succession.

Les réponses des capteurs placés en éventail sont beaucoup plus homogènes. La position des capteurs dans l'éventail n'a qu'une faible influence sur l'amplitude de détection. Les capteurs ne donnent pas tous la même réponse, car ils sont inévitablement tous légèrement différents, notamment au niveau du revêtement. L'exemple des figures 4B et 4C illustre le gain en termes d'homogénéité de performances en détection des capteurs agencés en éventail.

L'exemple illustré à la figure 5 met en évidence le gain en sensibilité d'un dispositif de détection de type de celui des figures 1A, 1B. Il concerne, plus particulièrement, un capteur placé sur un bord de l'éventail (appelé C1) du dispositif de détection illustrée à la figure 1A et dont la fréquence de résonance est de 100 MHz.

La réponse de ce capteur C1 est comparée à celle du capteur C1" du dispositif de détection de la figure 4A, fonctionnant à une fréquence de résonance de 100 MHz et à celle d'un unique capteur de type microbalance à quartz fonctionnant à la fréquence de résonance 9MHz. Les capteurs comparés sont revêtus d'un matériau sensible de type silice fonctionnalisée avec des groupements méthyle. Le capteur C1" est le premier capteur que rencontre le flux de fluide lorsqu'il pénètre dans la chambre de la figure 4A. Le capteur unique est beaucoup moins sensible à cause de sa fréquence de résonance beaucoup plus petite que celle des capteurs C1" et C1. Le graphique de la figure 5 présente l'évolution des amplitudes de détection en Hz mesurées en présence de vapeurs de trinitrotoluène TNT très faiblement concentrées (pᵥₐₚ = 7 ppb) pour le capteur unique (signal S1), le capteur C1" (signal S2) et le capteur C1 (signal S3). Les mesures de variation de fréquence d'un capteur à l'autre sont faites après 10 minutes d'exposition au flux du fluide contenant des vapeurs de TNT.

Bien que la position du capteur C1" soit la plus favorable dans le dispositif de détection de la figure 4A, la variation de fréquence mesurée pour le capteur C1 est presque deux fois supérieure à celle mesurée pour le capteur C1". Par ailleurs, l'amplitude du signal S3 est remarquable en comparaison de celle du signal S1 qui est proche du bruit de fond et inexploitable pour détecter des concentrations de vapeurs si faibles. L'agencement des capteurs en éventail dans un montage en parallèle rend le dispositif de détection beaucoup plus sensible à des concentrations de substances chimiques à détecter très faibles.

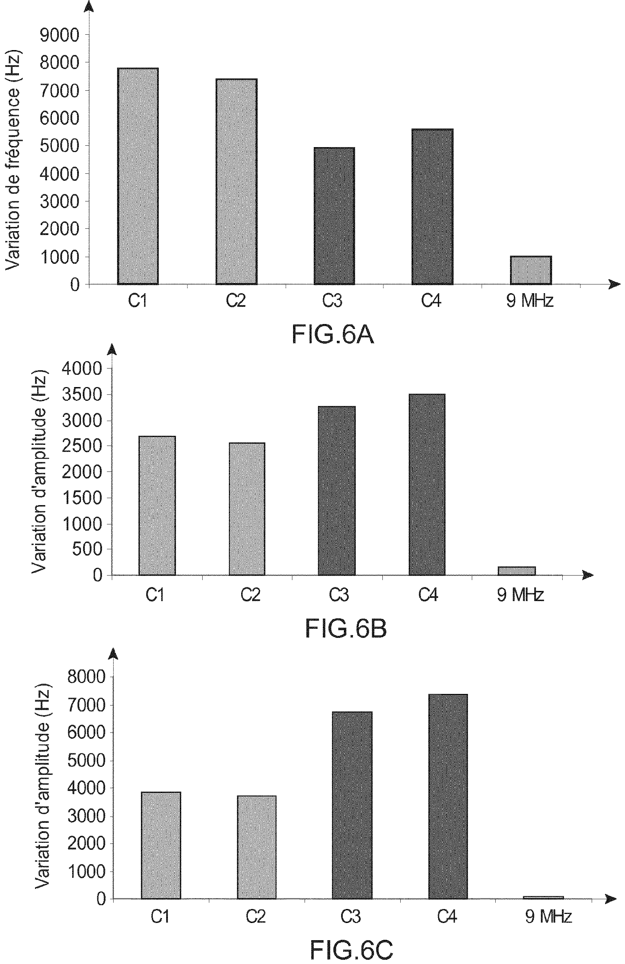

Les exemples illustrés sur les figures 6A, 6B, 6C mettent en évidence le gain en sélectivité de détection d'un dispositif de détection de type de celui des figures 1A, 1B. Plus particulièrement, les figures 6A, 6B, 6C illustrent les variations de fréquence mesurées par tous les capteurs C1 à C4 du dispositif de détection des figures 1A, 1B. Les capteurs C1 et C2 sont revêtus de silice fonctionnalisée avec des groupements méthyle tandis que les capteurs C3 et C4 sont revêtus de polypentypticène. La fréquence de résonance de ces capteurs est de 100 MHz. Ces figures donnent également la variation de fréquence d'un dispositif de détection possédant un capteur unique de type microbalance à quartz revêtu de silice fonctionnalisée avec des groupements méthyle et dont la fréquence de résonance est de 9 MHz.

Sur les figures 6A-6C, les valeurs de variation de fréquence correspondent à une moyenne des variations de fréquence calculée sur deux séries de mesures. Les concentrations sont de plus en plus faibles entres les figures 6A, 6B et 6C. Sur la figure 6A, le fluide est de l'air humide contenant des vapeurs de nitrométhane (pᵥₐₚ = 48000 ppm). Sur la figure 6B, le fluide est de l'air humide contenant des vapeurs d'éthylène glycol dinitrate EGDN (pᵥₐₚ = 100 ppm). Sur la figure 6C, le fluide est de l'air humide contenant des vapeurs de 4-nitrotoluène 4-NT (pᵥₐₚ = 64 ppm).

On peut noter à partir de ces graphiques que la reproductibilité est bonne entre les paires de capteurs ayant le même revêtement, quels que soient les composés à détecter.

L'amplitude des signaux fournis par les capteurs, en présence des différents composés chimiques et la cinétique de variation de fréquence sont dépendantes de la nature du matériau sensible. Ces caractéristiques sont directement exploitables dans l'algorithme de traitement du signal utilisé pour accroître la sélectivité du dispositif de détection. Les résultats concernant le capteur unique sont quasiment inexploitables.

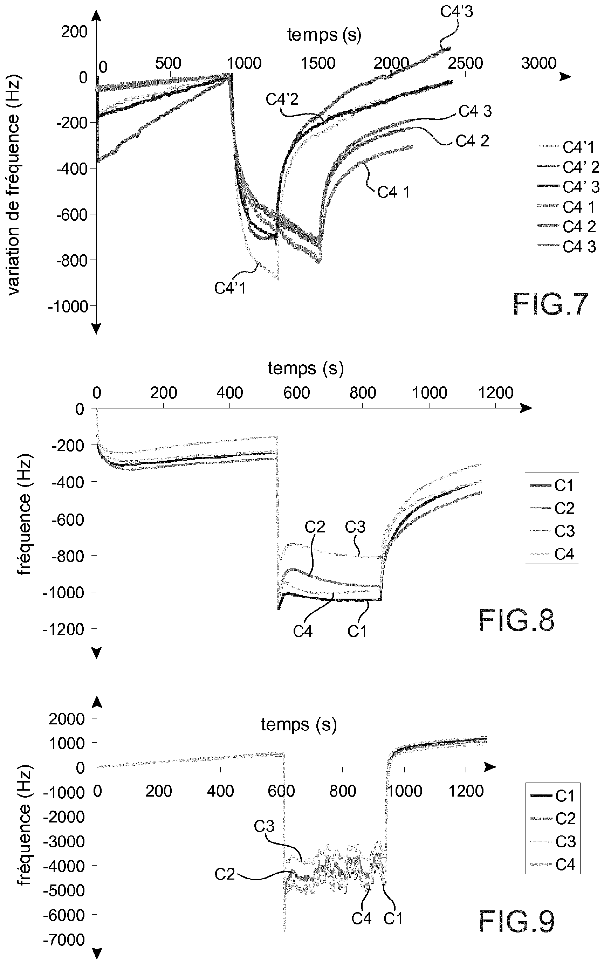

L'exemple illustré sur la figure 7 met en évidence le gain en rapidité de détection avec le dispositif de détection d'au moins un composé chimique illustré aux figures 2A, 2B dont les capteurs C1' à C4' sont montés en parallèle et positionnés imbriqués tête-bêche. Sur la figure 7, sont comparées les variations de fréquence en Hertz mesurées pour un seul capteur du dispositif de détection des figures 1A, 1B (capteurs montés en parallèle et positionnés en éventail) avec celles mesurées pour un seul capteur du dispositif de détection des figures 2A, 2B (capteurs montés en parallèle et positionnés imbriqués tête-bêche) en fonction du temps en seconde. Il s'agit des capteurs C4 et C4'. Trois mesures sont réalisées consécutivement avec comme fluide de l'air contenant des vapeurs de 2,3-diméthyl-2,3-dinitrobutane DMNB avec un taux d'humidité de 50%.

On note que la réponse du capteur dans la géométrie à capteurs imbriqués tête bêche est beaucoup plus rapide que dans la configuration à capteurs en éventail. Cela implique que la détection et l'identification des substances chimiques seront plus rapides, ce qui est important dans le cas d'un besoin de détection sur le terrain.

L'exemple illustré à la figure 8 concerne la détection d'amphétamine avec un dispositif de détection de type de celui des figures 1A, 1B, les capteurs étant montés en parallèle et positionnés en éventail. Les quatre capteurs C1 à C4 sont recouverts, sur leurs deux faces principales, d'un film mince d'un matériau sensible qui est du polypentypticène, la fréquence de résonance des capteurs est de 100 MHz. Les dispositifs de détection sont utilisés à une température de 20°C, en présence de vapeurs d'amphétamine prélevées dans un pilulier contenant 0,5 g de stupéfiant placé dans de l'air ambiant. Ce mode de prélèvement mis en oeuvre conduit à des concentrations de vapeurs d'amphétamine détectées bien inférieures à celles de sa pression de vapeur. La figure 8 montre l'évolution de la fréquence de résonance des quatre capteurs C1 à C4 en fonction du temps obtenue lors d'un tel test. On observe une diminution très rapide de la fréquence de résonance. La cinétique très rapide d'adsorption des vapeurs peut être exploitée dans le traitement du signal pour améliorer la qualité de détection.

Cet exemple montre la forte potentialité du dispositif de détection à capteurs en éventail pour la détection de vapeurs de stupéfiants très faiblement concentrées, y compris dans de l'air humide. Il est connu que l'humidité peut être très défavorable à la détection car son adsorption peut entrer en compétition avec celle de la vapeur cible (la vapeur d'amphétamine dans l'exemple).

L'exemple illustré à la figure 9 concerne la détection du benzoate de méthyle avec un dispositif de détection de type de celui des figures 1A, 1B, les capteurs étant montés en parallèle et positionnés en éventail. Le benzoate de méthyle est un composé issu de l'hydrolyse de la cocaïne. Il est considéré comme un marqueur de la cocaïne. Les capteurs du dispositif de détection sont soumis à des tests de détection réalisés à une température de 20°C en présence de vapeurs de benzoate de méthyle avec une pression de vapeur de 350 ppm dans de l'air ambiant.

La figure 9 illustre les variations de la fréquence de résonance des quatre capteurs C1 à C4 en fonction du temps, lors de l'exposition aux vapeurs de benzoate de méthyle. Une diminution rapide et intense de la fréquence est observée. L'amplitude de la variation de fréquence est de l'ordre de 5000 Hz. Le dispositif de détection des figures 1A, 1B est tout à fait performant pour la détection de benzoate de méthyle qui peut être un marqueur de la cocaïne.

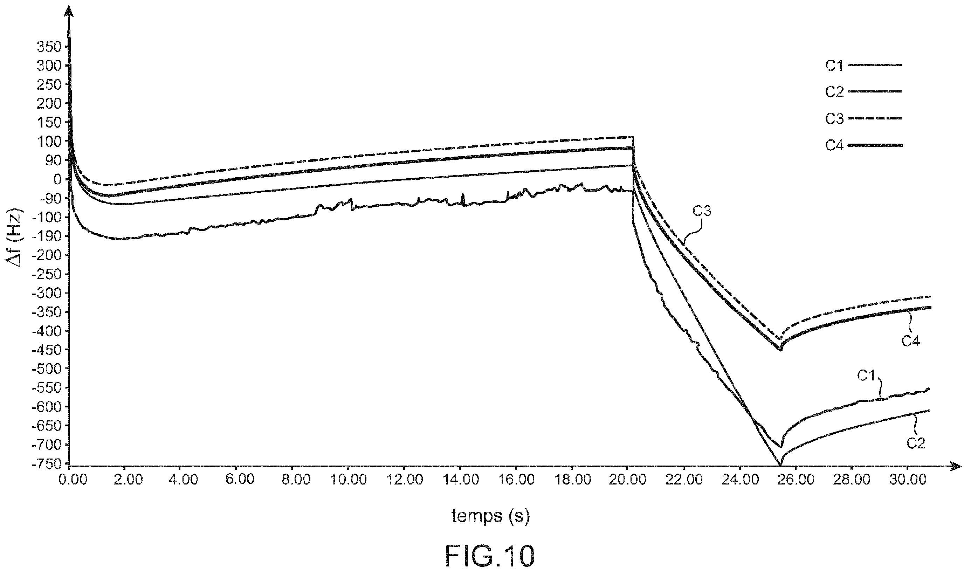

L'exemple illustré à la figure 10 concerne la détection de cocaïne saisie avec un dispositif de détection de type de celui des figures 1A, 1B, les capteurs étant montés en parallèle et agencés en éventail. Les capteurs du dispositif de détection sont soumis à des tests de détection réalisés à une température de 20°C, par prélèvement de vapeurs dans un pilulier contenant 0,5 g de cocaïne saisie, placé dans de l'air ambiant. La figure 10 illustre les variations de la fréquence de résonance des quatre capteurs C1 à C4 en fonction du temps lors de l'exposition aux vapeurs de cocaïne.

Une diminution de la fréquence de résonance prenant une forme caractéristique pseudo exponentielle peut être observée. Cette cinétique d'adsorption très différente de celle observée dans le cas d'une adsorption de vapeur de benzoate de méthyle dans le même dispositif de détection peut être utilisée au niveau du traitement du signal pour améliorer la fiabilité de détection. Le dispositif de détection des figures 1A, 1B possède une forte potentialité pour la détection de stupéfiants de type amphétamines ou cocaïne.

Bien que plusieurs modes de réalisation de la présente invention aient été représentés et décrits de façon détaillée, on comprendra que différents changements et modifications puissent être apportés sans sortir du cadre de l'invention notamment au niveau des formes des chambres, des orifices, des déflecteurs, du nombre de capteurs dans ces chambres.

### PUBLICATIONS CITÉES

[1] Lau K.T et al. : "The optimization of sorption sensor arrays for use in ambient conditions", Sensors and Actuators B Chemical, 1998, n°50, Pages 69-79;
[2] Seyama M. et al. : « Odor-sensor technology based on array of quartz crystal resonators coated with plasma-deposited organic film", NTT Technical Review, 2004, 2, n°2, pages 70-76;
[3] Auge J. et al. : «Versatile microcontrolled gas sensor array system using the quartz microbalance principle and pattern recognition methods", Sensors and Actuators B Chemical, 1995, n°26-27, pages 181-186;
[4] Bunte et al. : « Gasphase détection of TNT with layered imprinted polymers", 36th International Annual Conférence of ICT on Energetics Materials-Performance and Safety, June 28 - July 1st 2005, 2006, Karlsruhe Germany

## Revendications

1. Dispositif de détection d'un composé chimique dans un fluide comprenant une chambre (1) dotée d'un orifice d'entrée (3) d'un flux du fluide (F) et d'un orifice d'aspiration (4) du flux du fluide ayant traversé la chambre, et contenant plusieurs capteurs (C1-C4, C'1-C'2, 5) de type microbalance piézoélectrique délimités chacun par deux faces principales (5.1, 5.2) et un chant (5.3) et portés chacun par une paroi de la chambre (2.1, 2.2), au moins une des faces principales de chaque capteur étant revêtue d'un matériau sensible (9) au composé à détecter, chaque capteur présentant un plan médian de part et d'autre duquel s'étend chacune des faces principales (5.1, 5.2), en ce que chaque capteur est agencé dans la chambre (1) de manière à ce que son plan médian soit localement orthogonal à la paroi (2.1 ; 2.2) de la chambre qui porte le capteur, en ce que les capteurs sont situés à une même distance (δ) de l'orifice d'entrée, (3) en ce que :
- les capteurs (C1-C4) sont agencés en éventail, l'éventail ayant un centre du côté de l'orifice d'entrée (3), ou
- les capteurs (C1'-C4') ont leurs faces principales parallèles, ou
- la chambre (1) est en forme de tube (2) cylindrique de révolution d'axe (XX'), les capteurs (5) étant placés radialement dans la chambre,
**caractérisé en ce que** la chambre (1) contient en outre un déflecteur (6) du flux du fluide placé en aval des capteurs (C1 à C4), entre les capteurs (C1 à C4) et l'orifice d'aspiration (4).

2. Dispositif de détection selon la revendication 1, dans lequel les capteurs (C1-C4) sont agencés en éventail et dans lequel la chambre comporte un premier tronçon divergent (2.32) rabouté directement à un second tronçon convergent (2.33), l'orifice d'entrée (3) débouchant dans le tronçon divergent (2.32) et l'orifice d'aspiration (2.33) débouchant dans le tronçon convergent (4).

3. Dispositif de détection selon la revendication 1, dans lequel les capteurs (C1'-C4') ont leurs faces principales parallèles et sont imbriqués tête-bêche.

4. Dispositif de détection selon la revendication 3, dans lequel la chambre (1) est parallélépipédique construite autour d'un axe (XX') et possède deux faces opposées transversales à cet axe, le flux du fluide (F) parcourant la chambre (F1) selon cet axe, les deux faces transversales formant l'orifice d'entrée (3) et l'orifice d'aspiration (4).

5. Dispositif de détection selon la revendication 4, dans lequel la chambre (1) possède deux parois latérales (2.1, 2.2) selon cet axe (XX') dites paroi de base (2.1) et paroi de sommet (2.2) en utilisation, certains capteurs (C1', C3') imbriqués tête bêche sont rapportés sur la paroi de base (2.1), et les autres (C2', C4') sur la paroi de sommet (2.2).

6. Dispositif de détection selon la revendication 1, dans lequel les capteurs (5) sont placés radialement dans la chambre en forme de tube (2) cylindrique et dans lequel la chambre comporte en outre un déflecteur central (6.1) en forme de tige coaxiale avec l'axe (XX') du cylindre s'étendant le long des capteurs (5), dépourvue d'extrémité en amont des capteurs (5).

7. Dispositif de détection selon la revendication 6, dans lequel la chambre comporte en outre un déflecteur additionnel (6.2) placé en aval des capteurs (5) et destiné à maintenir en position dans la chambre (1) le déflecteur central (6.1).

8. Dispositif de détection selon l'une des revendications précédentes, dans lequel la chambre (1) a des parois internes en acier inoxydable électro-poli.

9. Dispositif de détection selon l'une des revendications précédentes, dans lequel le flux du fluide (F) conserve une composition constante ou quasiment constante en parcourant la distance (δ) séparant les capteurs de l'orifice d'entrée.

## Patentansprüche

1. Gerät zum Erkennen einer chemischen Verbindung in einem Fluid, umfassend eine Kammer (1), die mit einer Eintrittsöffnung (3) für einen Fluidstrom (F) und einer Ansaugöffnung (4) für den Fluidstrom, der die Kammer durchquert hat, versehen ist und mehrere Sensoren (C1-C4, C'1-C'2, 5) vom Typ piezoelektrische Mikrowaage enthält, die jeweils durch zwei Hauptflächen (5.1, 5.2) und einer Kante (5.3) begrenzt sind und jeweils von einer Wand der Kammer (2.1, 2.2) getragen werden, wobei mindestens eine der Hauptflächen jedes Sensors mit einem Material beschichtet ist, das für die zu erkennende Verbindung empfindlich (9) ist, wobei jeder Sensor eine Mittelebene aufweist, auf deren beiden Seiten sich jede der Hauptflächen (5.1, 5.2) erstreckt, dadurch, dass jeder Sensor in der Kammer (1) so angeordnet ist, dass seine Mittelebene lokal orthogonal zu der Wand (2.1; 2.2) der Kammer ist, die den Sensor trägt, dadurch, dass die Sensoren in einem gleichen Abstand (δ) von der Einlassöffnung angeordnet sind, (3) dadurch, dass:
- die Sensoren (C1-C4) fächerförmig angeordnet sind, wobei der Fächer einen Mittelpunkt auf der Seite der Einlassöffnung (3) hat, oder
- die Sensoren (C1'-C4') ihre Hauptflächen parallel zueinander haben, oder
- die Kammer (1) die Form eines zylindrischen Rohrs (2) mit einer Rotationsachse (XX') hat, wobei die Sensoren (5) radial in der Kammer angeordnet sind, **dadurch gekennzeichnet, dass** die Kammer (1) außerdem einen Deflektor (6) für den Fluidstrom enthält, der stromabwärts von den Sensoren (C1 bis C4) zwischen den Sensoren (C1 bis C4) und der Ansaugöffnung (4) angeordnet ist.

2. Gerät zum Erkennen nach Anspruch 1, wobei die Sensoren (C1-C4) fächerförmig angeordnet sind und wobei die Kammer einen ersten divergenten Abschnitt (2.32) aufweist, der direkt an einen zweiten konvergenten Abschnitt (2.33) anschließt, wobei die Einlassöffnung (3) in den divergenten Abschnitt (2.32) mündet und die Ansaugöffnung (2.33) in den konvergenten Abschnitt (4) mündet.

3. Gerät zum Erkennen nach Anspruch 1, wobei die Sensoren (C1'-C4') ihre Hauptflächen parallel zueinander haben und entgegengesetzt verschachtelt sind.

4. Gerät zum Erkennen nach Anspruch 3, wobei die Kammer (1) quaderförmig um eine Achse (XX') aufgebaut ist und zwei gegenüberliegende Flächen quer zu dieser Achse besitzt, wobei der Fluidstrom (F) die Kammer (F1) entlang dieser Achse durchströmt und die beiden Querflächen die Einlassöffnung (3) und die Ansaugöffnung (4) bilden.

5. Gerät zum Erkennen nach Anspruch 4, wobei die Kammer (1) zwei Seitenwände (2.1, 2.2) entlang dieser Achse (XX') besitzt, die als Basiswand (2.1) und Scheitelwand (2.2) bezeichnet werden, wobei bei der Verwendung bestimmte Sensoren (C1', C3'), die ineinander verschachtelt sind, an der Basiswand (2.1) angebracht sind, und die anderen (C2', C4') an der Scheitelwand (2.2) angebracht sind.

6. Gerät zum Erkennen nach Anspruch 1, wobei die Sensoren (5) radial in der Kammer in Form eines zylindrischen Rohrs (2) angeordnet sind und wobei die Kammer außerdem einen zentralen Deflektor (6.1) in Form eines Stabs aufweist, der koaxial zur Achse (XX') des Zylinders ist und sich entlang der Sensoren (5) erstreckt, wobei er kein Ende vor den Sensoren (5) hat.

7. Gerät zum Erkennen nach Anspruch 6, wobei die Kammer außerdem einen zusätzlichen Deflektor (6.2) aufweist, der stromabwärts von den Sensoren (5) angeordnet ist und dazu dient, den zentralen Deflektor (6.1) in der Kammer (1) in Position zu halten.

8. Gerät zum Erkennen nach einem der vorstehenden Ansprüche, wobei die Kammer (1) Innenwände aus elektropoliertem rostfreiem Stahl aufweist.

9. Gerät zum Erkennen nach einem der vorstehenden Ansprüche, wobei der Fluidstrom (F) beim Durchlaufen des Abstands (δ) zwischen den Sensoren und der Einlassöffnung eine konstante oder nahezu konstante Zusammensetzung beibehält.

## Claims

1. A device for detecting a chemical compound in a fluid comprising a chamber (1) provided with an inlet orifice (B) for a flow of fluid (F) and a suction orifice (4) for the flow of fluid having passed through the chamber, and containing several sensors (C1-C4, C'1-C'2, 5) of the piezoelectric microbalance type each delimited by two main faces (5.1, 5.2) and an edge (5.3) and each carried by a wall of the chamber (2.1, 2.2), at least one of the main faces of each sensor being coated with a material (9) sensitive to the compound to be detected, each sensor having a median plane on either side of which each of the main faces (5.1, 5.2) extends, in that each sensor is arranged in the chamber (1) so that its median plane is locally orthogonal to the wall (2.1; 2.2) of the chamber which carries the sensor, in that the sensors are located at the same distance (δ) from the inlet orifice, (3) in that:
- the sensors (C1-C4) are arranged in a fan shape, the fan having a centre
on the side of the inlet orifice (3), or
- the sensors (C1'-C4') have their main faces parallel, or
- the chamber (1) is in the form of a cylindrical tube (2) of revolution with an axis (XX'), the sensors (5) being placed radially in the chamber, **characterised in that** the chamber (1) further contains a deflector (6) for the flow of fluid placed downstream of the sensors (C1 to C4), between the sensors (C1 to C4) and the suction orifice (4).

2. The detection device according to claim 1, wherein the sensors (C1-C4) are arranged in a fan shape and wherein the chamber includes a first divergent section (2.32) directly connected to a second convergent section (2.33), the inlet orifice (3) opening into the divergent section (2.32) and the suction orifice (2.33) opening into the convergent section (4).

3. The detection device according to claim 1, wherein the sensors (C1'-C4') have their main faces parallel and are nested head to tail.

4. The detection device according to claim 3, wherein the chamber (1) is parallelepipedal constructed around an axis (XX') and has two opposite faces transverse to this axis, the flow of the fluid (F) passing through the chamber (F1) along this axis, the two transverse faces forming the inlet orifice (3) and the suction orifice (4).

5. The detection device according to claim 4, wherein the chamber (1) has two side walls (2.1, 2.2) along this axis (XX') called base wall (2.1) and top wall (2.2) in use, certain sensors (C1', C3') nested head to tail are attached to the base wall (2.1), and the others (C2', C4') to the top wall (2.2).

6. The detection device according to claim 1, wherein the sensors (5) are placed radially in the chamber in the form of a cylindrical tube (2) and wherein the chamber further includes a central deflector (6.1) in the shape of a rod coaxial with the axis (XX') of the cylinder extending along the sensors (5), without an end upstream of the sensors (5).

7. The detection device according to claim 6, wherein the chamber further includes an additional deflector (6.2) placed downstream of the sensors (5) and intended to maintain the central deflector (6.1) in position in the chamber (1).

8. The detection device according to one of the preceding claims, wherein the chamber (1) has internal walls made of electro-polished stainless steel.

9. The detection device according to one of the preceding claims, wherein the flow of fluid (F) maintains a constant or almost constant composition while travelling the distance (δ) separating the sensors from the inlet orifice.
